# EUROPÄISCHE PATENTSCHRIFT

(11) **EP 3 075 661 B1**
(45) Veröffentlichungstag und Bekanntmachung des Hinweises auf die Patenterteilung: **23.01.2019**
(21) Anmeldenummer: 16161869.9
(22) Anmeldetag: 23.03.2016
(51) Int. Cl.: B64D 27/18, B64D 29/08

(54) **TRIEBWERKSVERKLEIDUNG EINER FLUGGASTURBINE**
ENGINE COWL OF AN AIRCRAFT GAS TURBINE
HABILLAGE DE TURBINE A GAZ POUR AÉRONEF

(30) Priorität: 02.04.2015 DE 102015206093
(43) Veröffentlichungstag der Anmeldung: 05.10.2016
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Hoefer & Partner Patentanwälte mbB

(56) Entgegenhaltungen:
- FR-A1- 2 930 762
- US-A- 4 801 112
- US-A- 4 940 196
- US-A1- 2010 327 110
- US-A1- 2013 220 435
- US-A1- 2014 334 922

## Beschreibung

Die Erfindung bezieht sich auf eine Triebwerksverkleidung einer Fluggasturbine und dabei insbesondere auf eine Verkleidung, welche einen leichten Zugang zu den einzelnen Komponenten der Triebwerksverkleidung ermöglicht.

Aus der US 2013/0220435 A1 sind Konstruktionen bekannt, bei welchen ein hinterer Teil der Triebwerksverkleidung zusammen mit den Schubumkehrkaskaden um eine Schwenkachse nach außen schwenkbar ist, welche im Bereich der Triebwerksaufhängung angeordnet ist. Dabei erweist es sich, wie auch bei anderen aus dem Stand der Technik bekannten Konstruktionen als nachteilig, dass die zu öffnenden Bereiche der Triebwerksverkleidung sehr groß und sehr schwer sind. Zusätzlich zu dem Gewicht der zu öffnenden Bereiche der Triebwerksverkleidung und der Notwendigkeit, geeignete Antriebe einzubauen, bereitet es Schwierigkeiten, die geöffneten Bereiche so zu sichern, dass diese zuverlässig geöffnet bleiben, auch wenn Windlasten auf diese einwirken.

Bei derartigen vollständig zu öffnenden Triebwerksverkleidungen wird zwar die Zugänglichkeit für die Wartung etwas vereinfacht, andererseits ergeben sich insgesamt sehr schwere Strukturen, welche das Gesamtgewicht der Triebwerksverkleidung erheblich erhöhen. Hinzu kommen hydraulische oder elektrische Systeme für die Öffnung und das Schließen der Triebwerksverkleidung, welche zusätzlich zu den hohen Herstellungskosten ein beachtliches Gewicht aufweisen. Beim Flug des Flugzeuges werden somit erhebliche, für die Flugfunktion der Fluggasturbine nicht benötigte Massen mittransportiert, wodurch sich auch die Effizienz der gesamten Fluggasturbine verschlechtert.

Die bekannten Konstruktionen weisen noch einen weiteren, erheblichen Nachteil auf. Der hintere Bereich der Triebwerksverkleidung wird üblicherweise in Axialrichtung verschoben, wenn eine Schubumkehrfunktion der Fluggasturbine benötigt wird. Die hierfür verwendeten Antriebe, Führungsschienen oder ähnliches müssen bei einer vollständig zu öffnenden Verkleidung angepasst werden, um entweder leicht demontierbar zu sein oder um die Öffnung nicht zu behindern. Dies betrifft auch Strömungsumlenkbauteile, wie beispielsweise Kaskaden oder ähnliches. Insgesamt ergibt sich somit ein sehr komplexer Gesamtaufbau, welcher, wie erwähnt, ein hohes Gewicht aufweist und eine Vielzahl von zusätzlichen Komponenten erfordert, die gewartet werden müssen und die im Hinblick auf die Betriebssicherheit kritisch werden können.

Die US 2010/327110 A1 zeigt eine Triebwerksverkleidung, bei welcher im hinteren unteren Bereich eine Tür geöffnet werden kann, welche mittels seitlicher Scharniere um eine im Wesentlichen vertikale Achse verschwenkbar ist. Eine ähnliche Konstruktion mit unteren, um seitliche Achsen verschwenkbaren Türen offenbart die US 4 801 112 A.

Aus der US 4 940 196 A sind seitliche Türen vorbekannt, welche jeweils die gesamte Seitenfläche der Triebwerksverkleidung umfassen und um obere horizontale Achsen verschwenkbar sind. Eine ähnliche Lösung zeigt die US 2013/220435 A1.

Gemäß der FR 2 930 762 A1 ist es möglich, im unteren Bereich der Triebwerksverkleidung türähnliche Klappen vorzusehen, welche um ein oben liegendes horizontales Scharnier verschwenkbar sind. Ein gemeinsames oberes horizontales Scharnier sieht die US 2014/334922 A1 vor, um die gesamten Seitenverkleidungen hochzuklappen.

Der Erfindung liegt die Aufgabe zugrunde, eine Triebwerksverkleidung der eingangs genannten Art zu schaffen, welche bei einfachem Aufbau und einfacher, kostengünstiger Herstellbarkeit eine gute Zugänglichkeit insbesondere des hinteren Bereichs der Fluggasturbine ermöglicht und bei geringem Gewicht und geringen Herstellungskosten ein hohes Maß an Sicherheit aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist vorgesehen, dass der hintere Bereich der Triebwerksverkleidung, welcher in Axialrichtung verschiebbar ist, um eine Schubumkehrfunktion zu gewährleisten und/oder um den Querschnitt der Ausströmdüse des Nebenstromkanals zu verändern, zumindest zwei seitliche Türen aufweist, welche am unteren Bereich des hinteren Bereichs der Triebwerksverkleidung angeordnet sind und mittels oben liegender Scharniere zu öffnen sind, wobei die Scharniere zur Triebwerksachse geneigt angeordnet sind.

Mit der erfindungsgemäßen Lösung ist es möglich, den hinteren, unteren Bereich der Fluggasturbine für Wartungsmaßnahmen zugänglich zu machen. Dabei öffnen sich die beiden Türen ähnlich den Türen eines Bombenschachtes, während der restliche Teil der hinteren Triebwerksverkleidung, insbesondere der obere und/oder vordere Bereich, welcher an den feststehenden Bereich der Triebwerksverkleidung angrenzt, geschlossen bleiben kann. Die Türen ermöglichen eine ausreichende Zugänglichkeit zu den im Bereich der Wartung relevanten Komponenten der Fluggasturbine und weisen insgesamt eine Größe und eine Masse auf, welche leicht und betriebssicher zu handhaben ist. Es ergibt sich somit ein einfacher Aufbau, welcher wenig Bauelemente benötigt und welcher zudem unabhängig von den Baukomponenten ist, welche zur axialen Längsverschiebung des hinteren Bereichs der Triebwerksverkleidung benötigt werden. Auch hierdurch vereinfacht sich der gesamte Aufbau.

Da erfindungsgemäß nur zwei Türen, welche am seitlichen unteren Bereich der Triebwerksverkleidung vorgesehen sind, geöffnet werden müssen, kann der gesamte Öffnungsmechanismus einfach und mit geringem Gewicht aufgebaut werden. Es sind keine zusätzlichen Deinstallationsmaßnahmen oder ähnliches erforderlich, vielmehr können die Türen zur Wartung direkt aufgeklappt werden.

Besonders vorteilhaft ist es, wenn die jeweilige Tür mittels Aktuatoren in den unterschiedlichen Öffnungszuständen gestützt ist. Die Aktuatoren können beispielsweise als Gasdruckdämpfer ausgebildet sein und so konzipiert sein, dass sie bei einer geringen Öffnung der Türen (geringer Schwenkwinkel der Türen) einen Selbstschließeffekt haben, während sie bei Überschreiten eines vorgegebenen Öffnungswinkels die Türen restlich selbst öffnen und in der geöffneten Position halten. Die Bedienungsmannschaft braucht dabei nicht zusätzliche Haltevorrichtungen und Haltestangen installieren, um ein unbeabsichtigtes Schließen der Türen zu verhindern. Alternativ oder zusätzlich können auch Teleskop-Gasdruckfedern vorgesehen werden. Somit ist die erfindungsgemäße Lösung auch besonders vorteilhaft direkt am Vorfeld eines Flugplatzes einsetzbar, trotz der dort herrschenden Winde und Luftströmungen.

Um ein vollständiges Öffnen der Türen und einen guten Zugang zu dem hinteren unteren Bereich der Fluggasturbine sicherzustellen, ist es besonders vorteilhaft, wenn die Türen seitlich und nach hinten verschwenkbar gelagert sind. Die Scharniere sind dabei bevorzugterweise unterhalb einer die Maschinenachse umfassenden, im Wesentlichen horizontalen Mittelebene der Fluggasturbine angeordnet.

Erfindungsgemäß ergeben sich somit kleinere Türen und kleinere Scharniere, verglichen mit den aus dem Stand der Technik bekannten Konstruktionen. Auch die Verschließmechanismen oder Verschlüsse können kleiner und leichter dimensioniert sein. Es ergibt sich somit insgesamt eine leichtere Struktur, welche kleinere Bedienungskräfte erfordert. Somit können die erfindungsgemäßen Türen auch manuell geöffnet und geschlossen werden.

In bevorzugter Weiterbildung der Erfindung ist vorgesehen, dass im Bereich der Türen auch zumindest ein Teil der Kerntriebwerksverkleidung durch geeignete Inspektionstüren geöffnet werden kann. Somit ist es möglich, auch an dem Kerntriebwerk Wartungsmaßnahmen durchzuführen, ohne dass aufwendige Demontagearbeiten erforderlich sind.

Es ergibt sich somit durch die erfindungsgemäße Lösung eine sichere Ausgestaltung, welche Wartungsvorgänge erleichtert und im Vergleich zum Stand der Technik eine erhebliche Gewichtsreduzierung mit sich bringt.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine rückseitige Ansicht eines an einem Flügel eines Flugzeugs befestigten Fluggasturbinentriebwerks mit geöffneten erfindungsgemäßen Türen,
- Fig. 3: eine schematische Seitenansicht, analog Fig. 2,
- Fig. 4: eine rückseitige Teilansicht zur Darstellung der Aktuatoren, und
- Fig. 5: eine Seitenansicht, analog Fig. 2, im geöffneten Zustand der Türen.

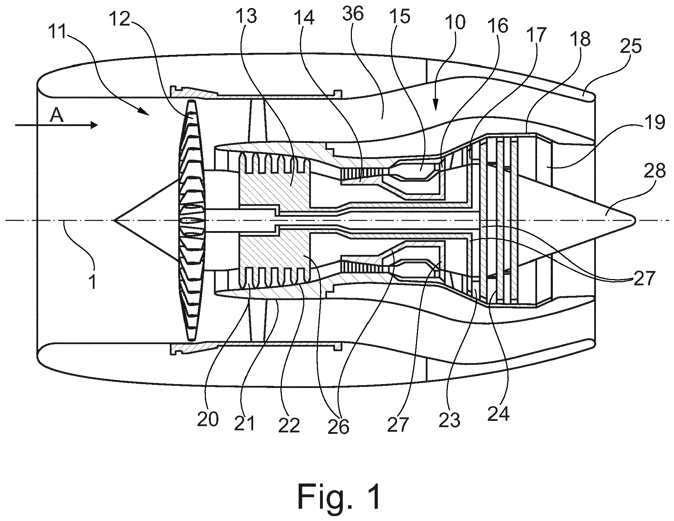

Das Gasturbinentriebwerk 10 gemäß Fig. 1 ist ein allgemein dargestelltes Beispiel einer Turbomaschine, bei der die Erfindung Anwendung finden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, eine Brennkammer 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Kerntriebwerksgehäuse 21 in einen ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenrotorschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenrotorschaufeln 24 drehen sich im Betrieb um die Triebwerksachse 1.

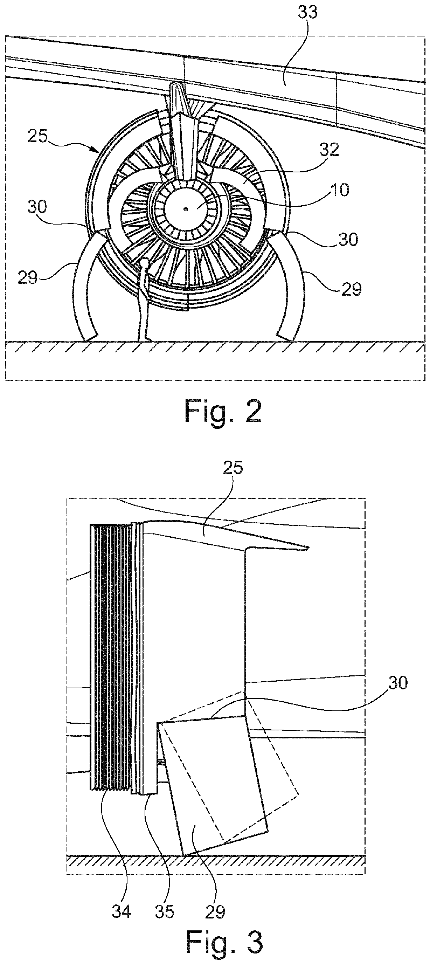

Die Fig. 2 zeigt eine rückseitige Ansicht eines an einem Flügel 33 eines Flugzeugs befestigten Fluggasturbinentriebwerks. Dabei ist der hintere Bereich 25 der Triebwerksverkleidung sichtbar. Unterhalb einer durch die Triebwerksachse 1 (s. Fig. 1) verlaufenden horizontalen Ebene sind an dem hinteren Bereich 25 der Triebwerksverkleidung Scharniere 30 vorgesehen, welche seitliche Türen 29 lagern. Die Fig. 2 zeigt die Triebwerksverkleidung sowie die Türen in vergrößerter oder verdickter Darstellung, um die Funktionsweise zu verdeutlichen. Die Fig. 2 zeigt dabei, dass der untere Bereich der Fluggasturbine bei geöffneten Türen 29 für die Wartung frei zugänglich ist.

Zusätzlich zeigt die Fig. 2 mit dem Bezugszeichen 32 zwei seitliche Inspektionstüren des Kerntriebwerks 10, welche unabhängig von den Türen 29 des hinteren Bereichs 25 der Triebwerksverkleidung geöffnet werden können, um einen zusätzlichen Zugang zu dem Kerntriebwerk 10 zu ermöglichen.

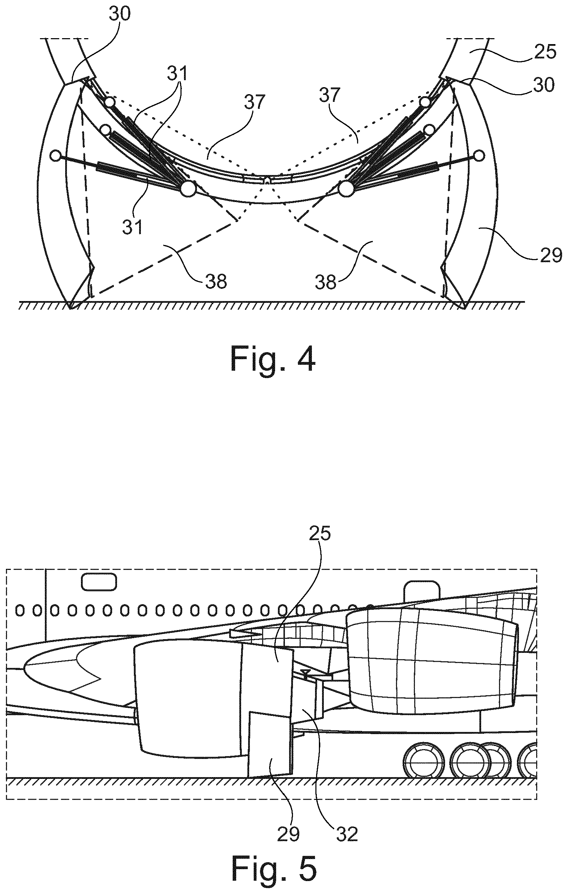

Die Fig. 3 zeigt in der Seitenansicht, analog der Darstellung der Fig. 5, dass die erfindungsgemäßen Türen 29 nur am hinteren unteren Bereich der hinteren Triebwerksverkleidung vorgesehen sind. Der restliche hintere Bereich 25 der Triebwerksverkleidung, welcher in Axialrichtung verschiebbar ist, ist für die erfindungsgemäßen Türen 29 nicht modifiziert und benötigt somit keine zusätzlichen Maßnahmen. Insbesondere ist es nicht erforderlich, Schubumkehrelemente 34, welche in Fig. 3 nur schematisch dargestellt sind, zum Öffnen der Verkleidung zu demontieren. Vielmehr können die Schubumkehrelemente 34 (Kaskadenelemente oder ähnliches) an einem vorderen Bereich 35 der hinteren Triebwerksverkleidung 25 verbleiben.

Die Fig. 3 veranschaulicht die Wirkung einer erfindungsgemäß vorgesehenen Schrägstellung der Scharniere 30. Hierdurch werden die Türen 29 nicht nur aufgeklappt, sondern etwas nach hinten verschwenkt. Dies verbessert die Bodenfreiheit und die Zugänglichkeit.

Die Fig. 5 zeigt in der Seitenansicht verdeutlichend nochmals die Situation gemäß Fig. 3, wobei insbesondere ersichtlich ist, dass sich die äußere Triebwerksverkleidung nicht über die gesamte Länge des Kerntriebwerks zu erstrecken braucht. Die vorliegende Erfindung ist vielmehr auch bei kürzeren Triebwerksverkleidungen und damit kürzeren Nebenstromkanälen 36 vorteilhaft einsetzbar.

Die Fig. 4 zeigt eine vereinfache rückseitige Ansicht der erfindungsgemäßen Türen und zeigt, dass diese durch längenveränderbare Aktuatoren abgestützt und gehalten werden können. Die Aktuatoren sind beispielsweise als Kolben-Zylinder-Einheiten und dabei insbesondere als Gasdruckdämpfer ausgebildet. Somit ist es erfindungsgemäß nicht erforderlich, zusätzliche Abstützmechanismen oder ähnliches für die Türen vorzusehen. Die Aktuatoren sind dabei bevorzugterweise so ausgebildet, dass sie bei einer geringen Öffnung der Türen eine selbstschließende Tendenz haben. Dieser Öffnungsbereich ist schematisch durch das Dreieck 37 eingezeichnet. Bei einem weiteren Öffnen der Türen 29 (Öffnungsbereich 38) weisen die Aktuatoren 31 die Tendenz zum selbsttätigen Öffnen auf. Dies unterstützt die manuelle Betätigung der Türen 29. Die Fig. 4 zeigt jeweils drei unterschiedliche Positionen der Aktuatoren 31, welche sich in den jeweiligen unterschiedlichen Öffnungspositionen der Türen 29 ergeben.

### Bezugszeichenliste:

- 1: Triebwerksachse
- 10: Gasturbinentriebwerk / Kerntriebwerk
- 11: Lufteinlass
- 12: Fan
- 13: Mitteldruckkompressor (Verdichter)
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Kerntriebwerksgehäuse
- 22: Kompressorlaufschaufeln
- 23: Leitschaufeln
- 24: Turbinenrotorschaufeln
- 25: hinterer Bereich der Triebwerksverkleidung
- 26: Kompressortrommel oder -scheibe
- 27: Turbinenrotornabe
- 28: Auslasskonus
- 29: Tür
- 30: Scharnier
- 31: Aktuator
- 32: Inspektionstür
- 33: Flügel
- 34: Schubumkehrelement
- 35: vorderer Bereich
- 36: Nebenstromkanal
- 37: Schließbereich
- 38: Öffnungsbereich

## Patentansprüche

1. Triebwerksverkleidung einer eine Triebwerksachse (1) aufweisenden Fluggasturbine, deren hinterer Bereich (25) zumindest zwei Türen (29) aufweist, welche am seitlichen unteren Bereich des hinteren Bereichs (25) der Triebwerksverkleidung angeordnet sind und mittels unterhalb einer durch die Triebwerksachse (1) verlaufenden, im Wesentlichen horizontalen Mittelebene oben an der Tür (29) liegender Scharniere (30) zu öffnen sind, wobei die Scharniere (30) zur Triebwerksachse (1) geneigt angeordnet sind, wobei die Türen (29) seitlich und nach hinten verschwenkbar gelagert sind.

2. Triebwerksverkleidung nach Anspruch 1, **dadurch gekennzeichnet, dass** die Türen (29) mittels Aktuatoren (31) in den unterschiedlichen Öffnungszuständen gestützt sind.

3. Triebwerksverkleidung nach Anspruch 2, **dadurch gekennzeichnet, dass** die Aktuatoren (31) als Kolben-Zylinder-Einheiten, insbesondere als Gasdruckdämpfer, ausgebildet sind.

4. Triebwerksverkleidung nach einem der Ansprüche 2 oder 3, **dadurch gekennzeichnet, dass** die Aktuatoren (31) kniehebelartig wirken und/oder einen Öffnungsvorgang oder einen Schließvorgang der Türen (29) unterstützen.

5. Triebwerksverkleidung nach einem der Ansprüche 1 bis 4, **dadurch gekennzeichnet, dass** der hintere Bereich (25) der Triebwerksverkleidung in Axialrichtung verschiebbar ausgebildet ist.

6. Triebwerksverkleidung nach einem der Ansprüche 1 bis 5, **dadurch gekennzeichnet, dass** der hintere Bereich (25) der Triebwerksverkleidung Schubumkehrelemente (34) lagert.

7. Triebwerksverkleidung nach einem der Ansprüche 1 bis 6, **dadurch gekennzeichnet, dass** eine Kerntriebwerksverkleidung im Bereich der Türen (29) des hinteren Bereichs (25) der Triebwerksverkleidung mit Inspektionstüren (32) versehen ist.

8. Triebwerksverkleidung nach Anspruch 7, **dadurch gekennzeichnet, dass** die Inspektionstüren (32) unabhängig von den Türen (29) des hinteren Bereichs (25) der Triebwerksverkleidung betätigbar sind.

## Claims

1. Engine cowling of an aircraft gas turbine having an engine axis (1), with the rear area (25) of the aircraft gas turbine having at least two doors (29) that are arranged at the lateral lower area of the rear area (25) of the engine cowling and can be opened by means of hinges (30) that are arranged at the top of the door (29) below a substantially horizontal central plane extending through the engine axis (1), wherein the hinges (30) are arranged to be tilted with respect to the engine axis (1), wherein the doors (29) are mounted so as to be pivotable sideways and rearwards.

2. Engine cowling according to claim 1, **characterized in that** the doors (29) are supported in the different opening states by means of actuators (31).

3. Engine cowling according to claim 2, **characterized in that** the actuators (31) are embodied as piston-cylinder units, in particular as gas pressure dampers.

4. Engine cowling according to any of the claims 2 or 3, **characterized in that** the actuators (31) act in the manner of a knee lever and/or support an opening process or a closing process of the doors (29).

5. Engine cowling according to any of the claims 1 to 4, **characterized in that** the rear area (25) of the engine cowling is embodied so as to be displaceable in the axial direction.

6. Engine cowling according to any of the claims 1 to 5, **characterized in that** thrust reversal elements (34) are mounted on the rear area (25) of the engine cowling.

7. Engine cowling according to any of the claims 1 to 6, **characterized in that** a core engine cowling is provided with inspection doors (32) in the area of the doors (29) of the rear area (25) of the engine cowling.

8. Engine cowling according to claim 7, **characterized in that** the inspection doors (32) can be actuated independently of the doors (29) of the rear area (25) of the engine cowling.

## Revendications

1. Habillage de réacteur d'une turbine à gaz d'aéronef présentant un axe de réacteur (1), dont la région arrière (25) présente au moins deux portes (29) qui sont disposées au niveau de la région latérale inférieure de la région arrière (25) de l'habillage de réacteur et qui peuvent être ouvertes au moyen de charnières (30) situées en haut sur la porte (29), en dessous d'un plan médian essentiellement horizontal s'étendant à travers l'axe de réacteur (1), les charnières (30) étant disposées de manière inclinée par rapport à l'axe de réacteur (1), les portes (29) étant supportées latéralement et de manière à pouvoir pivoter vers l'arrière.

2. Habillage de réacteur selon la revendication 1, **caractérisé en ce que** les portes (29) sont supportées au moyen d'actionneurs (31) dans les différents états d'ouverture.

3. Habillage de réacteur selon la revendication 2, **caractérisé en ce que** les actionneurs (31) sont réalisés sous forme d'unités cylindre-piston, en particulier sous forme d'amortisseurs à pression de gaz.

4. Habillage de réacteur selon l'une quelconque des revendications 2 ou 3, **caractérisé en ce que** les actionneurs (31) agissent à la manière de leviers basculants et/ou favorisent une opération d'ouverture ou une opération de fermeture des portes (29).

5. Habillage de réacteur selon l'une quelconque des revendications 1 à 4, **caractérisé en ce que** la région arrière (25) de l'habillage de réacteur est réalisée de manière déplaçable dans la direction axiale.

6. Habillage de réacteur selon l'une quelconque des revendications 1 à 5, **caractérisé en ce que** la région arrière (25) de l'habillage de réacteur supporte des éléments d'inversion de poussée (34).

7. Habillage de réacteur selon l'une quelconque des revendications 1 à 6, **caractérisé en ce qu'**un habillage de réacteur central est pourvu de portes d'inspection (7) dans la région des portes (29) de la région arrière (25) de l'habillage de réacteur.

8. Habillage de réacteur selon la revendication 7, **caractérisé en ce que** les portes d'inspection (32) peuvent être actionnées indépendamment des portes (29) de la région arrière (25) de l'habillage de réacteur.
